# EUROPÄISCHE PATENTSCHRIFT

(11) **EP 0 412 541 B1**
(45) Veröffentlichungstag und Bekanntmachung des Hinweises auf die Patenterteilung: **26.01.1994**
(21) Anmeldenummer: 90115308.0
(22) Anmeldetag: 09.08.1990
(51) Int. Cl.: F16D 55/2265

(54) **Teilbelag-Scheibenbremse**
Spot-type disc brake
Frein à disque à garniture partielle

(30) Priorität: 11.08.1989 DE 8909654 U
(43) Veröffentlichungstag der Anmeldung: 13.02.1991
(73) Patentinhaber: LUCAS INDUSTRIES public limited company, Birmingham, B19 2XF West Midlands (GB)
(72) Erfinder: Schroeter, Christian, D-5485 Sinzig (DE)
(74) Vertreter: Goetz, Rupert, Dipl.-Ing.

(56) Entgegenhaltungen:
- DE-A- 2 251 111
- DE-A- 2 742 105
- FR-A- 1 095 494
- US-A- 3 443 669
- US-A- 3 884 332

## Beschreibung

Die Erfindung betrifft eine Teilbelag-Scheibenbremse mit
- einem Bremsträger, der ein Befestigungsteil zur Befestigung nahe einer Bremsscheibe sowie ein die Bremsscheibe übergreifendes, mittig angeordnetes Brückenteil aufweist,
- Bremsbacken, die auf je einer Seite der Bremsscheibe angeordnet und am Bremsträger gegen Bremskräfte abgestützt sind,
- einem Schwimmrahmen, der einen Teil der Bremsscheibe sowie den Bremsträger und die Bremsbacken umgreift und am Bremsträger geführt ist, und
- mindestens einem Paar Betätigungszylinder, die am Schwimmrahmen annähernd symmetrisch in bezug auf eine axiale Mittelebene des Bremsträgers angeordnet sind.

Bei einer bekannten Bremse dieser Gattung (DE 2742105 A1) ist auf den beiden Seiten der Bremsscheibe je ein Bremsbacken angeordnet, der in Umfangsrichtung der Bremsscheibe langgestreckt ist und in der Mitte seines radial äußeren Randes eine Aussparung aufweist, in die das mittig angeordnete Brückenteil des Bremsträgers eingreift. Auf diese Weise sind beide Bremsbacken am Brückenteil axial verschiebbar geführt. Die beiden am Schwimmrahmen angeordneten Betätigungszylinder wirken beide auf einen und denselben Bremsbacken ein. Zwischen den beiden Betätigungszylindern ist am Schwimmrahmen ein zur Achse der Bremsscheibe paralleler Bolzen befestigt, der gleitend in eine Bohrung des Bremsträgers eingreift. Auf diese Weise ist der Schwimmrahmen am Bremsträger axial verschiebbar geführt.

Wenn die Bremsbacken dieser bekannten Bremse ausgewechselt werden müssen, ist es erforderlich, die gesamte Bremse auszubauen und den Schwimmrahmen vom Bremsträger zu trennen, da erst dann die Bremsbacken soweit axial verschoben werden können, daß sie sich vom Brückenteil des Bremsträgers lösen lassen. Das Brückenteil erweist sich also insoweit als nachteilig. Allerdings kommt die mittige Führung der beiden Bremsbacken am Brückenteil auch dem Schwimmrahmen zugute, an dem einer der Bremsbacken, nämlich der von den Betätigungszylindern entfernte, befestigt ist, so daß der Schwimmrahmen über diesen Bremsbacken mittelbar am axial äußeren Ende des Brückenteils geführt ist.

Die Anordnung von zwei Betätigungszylindern am Schwimmrahmen der bekannten Bremse hat abgesehen davon, daß sie eine mittige Führung des Schwimmrahmens am Befestigungsteil des Bremsträgers ermöglicht, den weiteren Vorteil, daß die Betätigungszylinder die von ihnen erzeugten Zuspannkräfte gleichmäßiger als es ein einziger mittig angeordneter Zylinder könnte, auf den benachbarten Bremsbacken übertragen, so daß dessen Reibbelag sich trotz seiner in Umfangsrichtung der Bremsscheibe erheblichen Länge im wesentlichen gleichmäßig abnutzt.

Bei mäßiger Betätigung der bekannten Bremse aus hoher Geschwindigkeit können jedoch Rubbelgeräusche auftreten, die sich auf das gesamte mit solchen Bremsen ausgerüstete Fahrzeug übertragen können und dann als sehr unangenehm empfunden werden.

Bei einer anderen bekannten Teilbelag-Scheibenbremse mit Schwimmrahmen (US-A-3 884 332) weist der Schwimmrahmen drei Brückenteile auf, die sich im wesentlichen parallel zur Bremsscheibenachse über den radial äußeren Bremsscheibenrand hinweg erstrecken. Die beiden in Umfangsrichtung äußeren Brückenteile des Schwimmrahmens sind an Schienen geführt, die an je einem Arm des Bremsträgers mit Schrauben befestigt sind. Das dritte Brückenteil des Schwimmrahmens ist zwischen den beiden in Umfangsrichtung äußeren Brückenteilen angeordnet und trennt zwei Öffnungen voneinander. Auf beiden Seiten der Bremsscheibe ist je ein Paar Bremsbacken angeordnet, deren Rückenplatten durch die genannten Öffnungen nach außen ragende Fortsätze aufweisen. Die beiden Bremsbacken jedes Paars sind in Umfangsrichtung eng nebeneinander angeordnet und stützen sich zur Übertragung von Bremskräften an einem achsparallelen Bolzen ab, der im Schwimmrahmen zentral angeordnet ist. Zum Auswechseln der Bremsbacken müssen die genannten Schienen vom Bremsträger abgeschraubt werden, so daß der Schwimmrahmen sich radial von der Bremsscheibe entfernen läßt. Dann lassen sich die Bremsbacken derart schräg stellen, daß sie in radialer Richtung durch die genannten Öffnungen herausgezogen und in entsprechender Weise durch neue Bremsbacken ersetzt werden können. Auch bei dieser bekannten Bremse können Rubbelgeräusche der beschriebenen Art vor allem dann auftreten, wenn die Bremse bei hoher Fahrtgeschwindigkeit mit mäßiger Kraft betätigt wird.

Es ist Aufgabe der Erfindung, solche störenden Rubbelgeräusche zu vermeiden.

Die Erfindung beruht auf der Erkenntnis, daß infolge der langgestreckten Bremsbackenform bzw. der engen Nachbarschaft der in Umfangsrichtung hintereinander angeordneten Bremsbacken bei Betätigung der beschriebenen bekannten Bremsen aus hoher Geschwindigkeit besonders starke örtliche Überhitzungen der Bremsscheibe entstehen können, die zu Dickenunterschieden der Bremsscheibe und sogar zu einer Gefügeumwandlung - Martensitbildung - führen. Diese Veränderungen der Dicke und/oder des Gefüges der Bremsscheibe bewirken bei rotierender Bremsscheibe eine starke periodische Schwankung des Bremsmomentes, wodurch über den das Bremsmoment abstützenden Bremsträger das Fahrzeug zu Schwingungen angeregt wird. Die örtliche Gefügeumwandlung kann des weiteren eine Rißbildung zwischen dem umgewandelten und dem ursprünglichen Gefüge hervorrufen.

Ausgehend von dieser Erkenntnis ist die genannte Aufgabe erfindungsgemäß bei einer Scheibenbremse der eingangs beschriebenen Gattung dadurch gelöst, daß
- auf jeder Seite der Bremsscheibe zwei Bremsbacken angeordnet und durch einen Zwischenraum voneinander getrennt sind, dessen in Umfangsrichtung der Bremsscheibe gemessene Weite mindestens ebensogroß ist wie die Breite des Brückenteils,
- die Bremsbacken im Einbauzustand der Bremse im wesentlichen radial zur Bremsscheibe am Brückenteil vorbei ausbaubar sind,
- der Schwimmrahmen auf zwei in der Mittelebene des Bremsträgers angeordneten Bolzen am Befestigungsteil geführt ist und
- der Schwimmrahmen zusätzlich an einer Führung geführt ist, die am Brückenteil, vom Befestigungsteil aus gesehen jenseits der Bremsscheibe, ausgebildet ist.

Auf jeder Seite der Bremsscheibe sind somit zwei voneinander unabhängige Bremsbacken angeordnet, die am Brückenteil vorbei im wesentlichen radial ausbaubar sind, ohne daß der Schwimmrahmen von der Bremsscheibe entfernt zu werden braucht. Der Zwischenraum zwischen den beiden Bremsbacken auf jeder Seite der Bremsscheibe genügt, um bei jeder einzelnen Umdrehung der Bremsscheibe an deren Bremsflächen, auf die je ein Bremsbacken eingewirkt hat, eine gewisse Abkühlung eintreten zu lassen, ehe auf diese Flächen der zweite Bremsbacken an der betreffenden Seite der Bremsscheibe einwirkt. Diese Abkühlung wirkt Gefügeveränderungen in der Bremsscheibe entgegen. Dies führt zu einer weniger intensiven Schwingungsanregung der Bremsbacken. In gleichem Sinne wirkt die Tatsache, daß bei geringeren Temperaturunterschieden in der Bremsscheibe geringere Dickenunterschiede infolge Wärmedehnung der Bremsscheibe auftreten. Durch die Unterteilung der Bremsbacken in je ein Bremsbackenpaar auf beiden Seiten der Bremsscheibe können sich die in Umfangsrichtung kurzen Bremsbeläge außerdem Dickenunterschieden der Bremsscheibe besser anpassen als lange Bremsbeläge, die überwiegend nur auf den Stellen größerer Dicke der Bremsscheibe aufliegen und stetige Überhitzung durch Energieumsetzung nur an diesen Stellen bewirken.

Die Anpassung der Bremsbeläge an die Bremsscheibe wird zusätzlich dadurch verbessert, daß der Schwimmrahmen infolge der erfindungsgemäßen Maßnahmen in seinen Führungen jederzeit leicht axial bewegbar bleibt. Nach der Erfindung sind nämlich die Führungen in deformationsarmen Zonen des Bremsträgers angeordnet, so daß ein Verklemmen der Bolzen gegeneinander vermieden wird. Hinzukommt, daß die Bremsbacken auf jeder Seite der Bremsscheibe mechanisch entkoppelt sind, so daß Schwingungen des einlaufseitigen Bremsbackens nicht auf den auslaufseitigen Bremsbacken übertragen werden.

Als Gesamtergebnis der erfindungsgemäßen Maßnahmen ist ein von Rubbelgeräuschen weitestgehend oder sogar vollständig freier Betrieb der Bremse selbst bei mäßig kräftigen Bremsungen festzustellen, die in dieser Hinsicht bisher besonders problematisch waren.

Zweckmäßigerweise ist die in Umfangsrichtung der Bremsscheibe gemessene Weite des Zwischenraums zwischen den Reibbelägen je zweier auf derselben Seite der Bremsscheibe angeordneter Bremsbacken mindestens halb so groß wie die in Umfangsrichtung gemessene Belagbreite jedes einzelnen Reibbelags.

Bei bevorzugten Ausführungsformen der Erfindung beträgt die Weite des Zwischenraums 70 bis 100 % der Belagbreite.

Ein Ausführungsbeispiel der Erfindung wird im folgenden anhand schematischer Zeichnungen mit weiteren Einzelheiten erläutert. Es zeigen:
- Fig. 1: eine Seitenansicht einer erfindungsgemäßen Bremse in Richtung des Pfeils I in Fig. 2,
- Fig. 2: die Draufsicht der Bremse in Richtung des Pfeils II in Fig. 1,
- Fig. 3: den axialen Schnitt III-III in Fig. 1, wobei einige Bauteile weggelassen sind,
- Fig. 4: den Schnitt IV-IV in Fig. 1,
- Fig. 5: einen Ausschnitt aus Fig. 1, wobei einige Teile weggelassen sind, und
- Fig. 6: einen der Fig. 3 entsprechenden axialen Schnitt einer abgewandelten Ausführungsform der Erfindung.

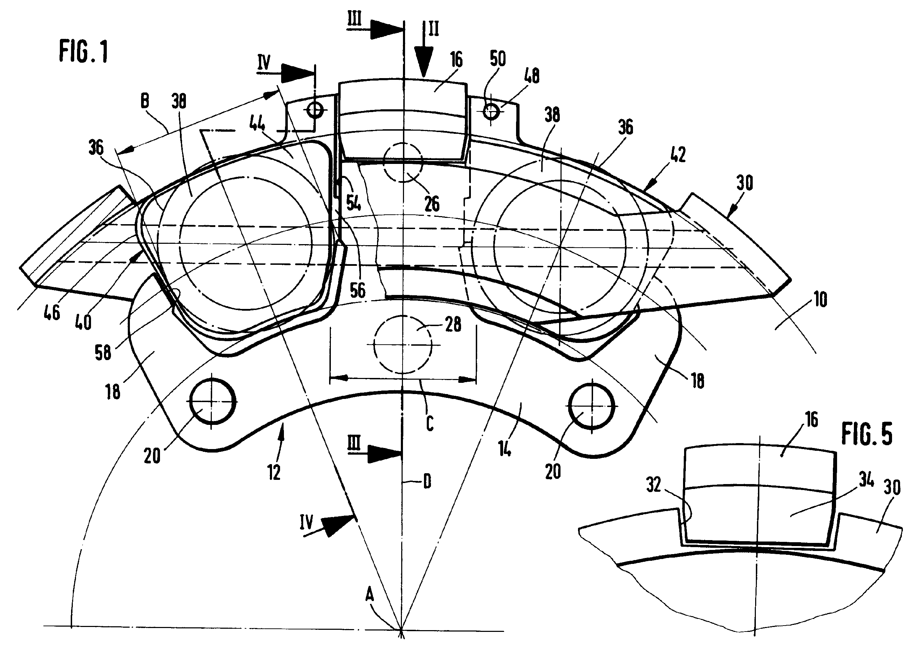

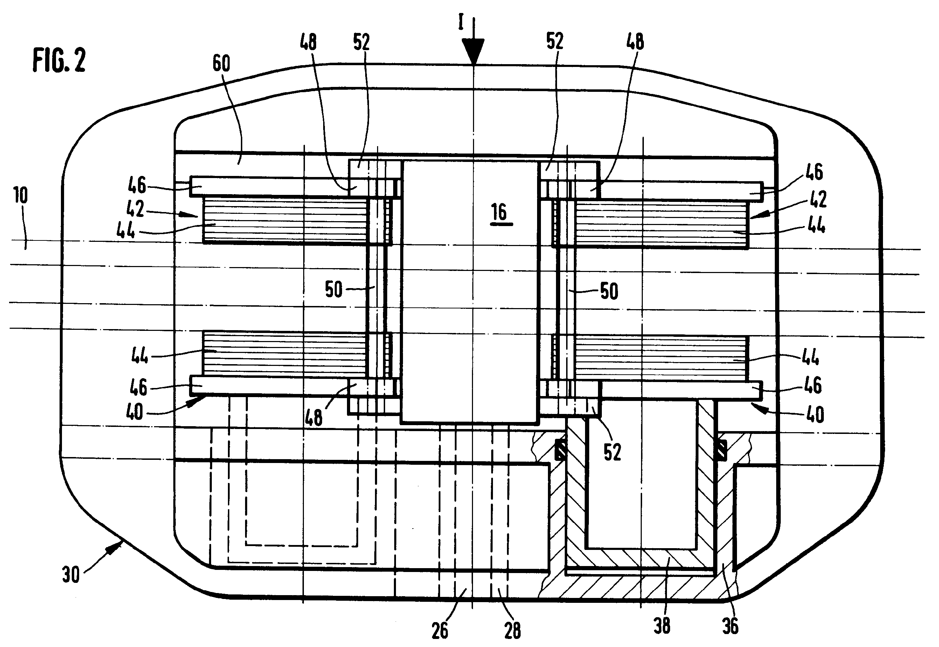

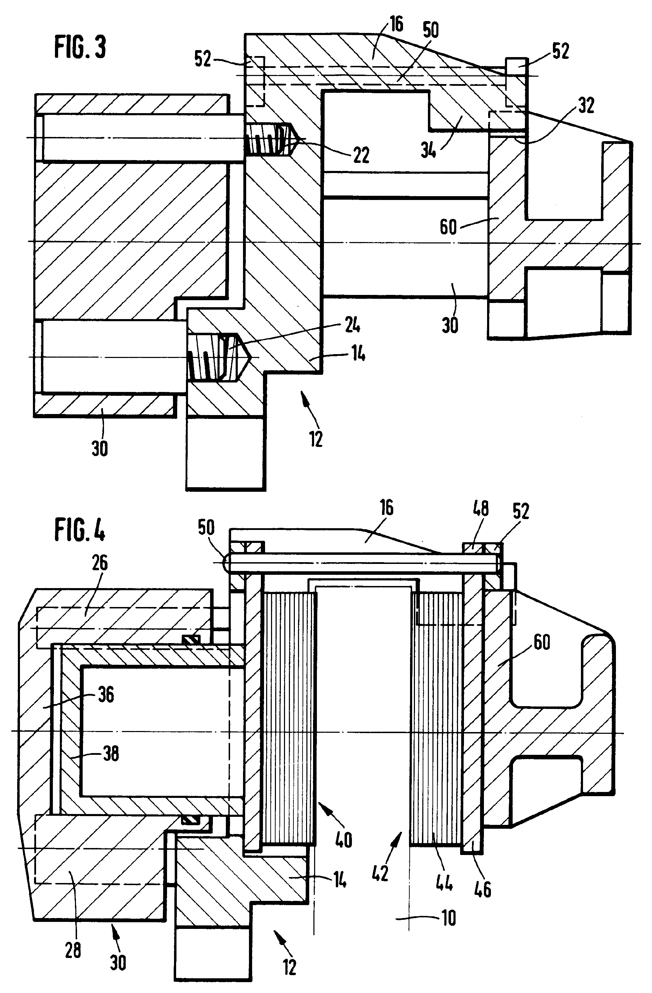

Die in Fig. 1 bis 5 dargestellte Bremse ist einer Bremsscheibe 10 zugeordnet, die mit strichpunktierten Linien angedeutet und gemäß Fig. 2 doppelwandig ausgebildet ist.

Zur Bremse gehört ein Bremsträger 12 mit einem Befestigungsteil 14, das in einer zur Bremsscheibe 10 parallelen Ebene angeordnet ist, und einem Brückenteil 16, das sich im rechten Winkel zu dieser Ebene über den äußeren Rand der Bremsscheibe 10 hinwegerstreckt.

Das Befestigungsteil 14 hat zwei Arme 18, die sich von je einem Loch 20 aus radial nach außen erstrecken, ohne den Rand der Bremsscheibe 10 zu erreichen. Die Löcher 20 dienen zur Befestigung des Bremsträgers 12 an einem Achsgehäuse od.dgl.. Das Befestigungsteil 14 weist ferner zwei Gewindelöcher 22 und 24 auf, die in der Mitte zwischen den beiden Armen 18 radial übereinander angeordnet sind. In den Gewindelöchern 22 und 24 ist je ein Gewindezapfen eines im übrigen glatten zylindrischen Bolzens 26 bzw. 28 befestigt.

Die beiden Bolzen 26 und 28 erstrecken sich parallel zur Achse A der Bremsscheibe 10 und führen einen Schwimmrahmen 30. Dessen Last wird hauptsächlich von dem in Fig. 1 unteren, der Achse A näheren Bolzen 28 getragen, dessen Durchmesser größer und dessen Länge geringer ist als die entsprechenden Maße des radial äußeren Bolzens 26. Die Aufgabe des radial äußeren Bolzens 26 besteht im wesentlichen darin, ein Schwenken des Schwimmrahmens 30 um den radial inneren Bolzen 28 zu verhindern. Durch die beiden Bolzen 26 und 28 ist der Schwimmrahmen 30 somit auf seiner in bezug auf das zugehörige Fahrzeug inneren Seite sicher geführt.

Damit der Schwimmrahmen 30 sich auch auf seiner fahrzeugäußeren Seite gegen Bremskräfte abstützen kann, greift in eine dort angeordnete, trapezförmige Aussparung 32 des Schwimmrahmens 30 eine komplementär trapezförmige Führung 34 ein, die am freien, vom Befestigungsteil 14 entfernten Ende des Brückenteils 16 ausgebildet ist.

In dem fahrzeuginneren Teil des Schwimmrahmens 30 sind zwei hydraulische Betätigungszylinder 36 angeordnet, in denen je ein Kolben 38 geführt ist. Den beiden Kolben 38 ist je ein unmittelbar von ihnen an die Bremsscheibe 10 andrückbarer Bremsbacken 40 zugeordnet. Auf der anderen, fahrzeugäußeren Seite der Bremsscheibe 10 ist ein weiteres Paar Bremsbacken 42 angeordnet, die durch Verschieben des Schwimmrahmens 30, also mittelbar, zu betätigen sind.

Sämtliche Bremsbacken 40 und 42 haben je einen Reibbelag 44 und eine Belagträgerplatte 46. Die Reibbeläge 44 sind sämtlich von gleicher Form und Größe; ihre Form ist im wesentlichen diejenige eines asymmetrischen Trapezes, das einen Kreis umschreibt, dessen Durchmesser annähernd mit dem Außendurchmesser des zugehörigen Zylinders 36 übereinstimmt. Gemäß Fig. 1 haben die Reibbeläge 44, in Umfangsrichtung der Bremsscheibe 10 gemessen, eine mittlere Belagbreite B, die etwas größer ist als der Außendurchmesser des zugehörigen Kolbens 38.

Zwischen den Reibbelägen 44 je zweier auf derselben Seite der Bremsscheibe 10 angeordneter Bremsbacken 40 bzw. 42 ist ein Zwischenraum freigelassen, dessen in Umfangsrichtung der Bremsscheibe 10 gemessene Weite C etwas größer als die Breite des Brückenteils 16 und nur wenig kleiner als die mittlere Belagbreite B ist. Bei dem dargestellten, bevorzugten Ausführungsbeispiel beträgt die Weite C ungefähr 80 bis 85 % der mittleren Belagbreite B.

Die gesamte Bremse ist symmetrisch in bezug auf die Mittelebene D gestaltet, in der die Achse A der Bremsscheibe 10 sowie die Achsen der beiden Bolzen 26 und 28 liegen.

Die Belagträgerplatten 46 sämtlicher Bremsbacken 40 und 42 haben je einen gelochten oberen Vorsprung 48. Durch die Vorsprünge 48 je zweier einander gegenüberliegender Bremsbacken 40 und 42 erstreckt sich je ein zur Achse A paralleler Haltestift 50, der an entsprechend gelochten Vorsprüngen 52 des Brückenteils 16 befestigt ist. Die Bremsbacken 40 und 42 sind auf diese Weise gegen Herausfallen gesichert.

Zur Abstützung der beiden unmittelbar von je einem Kolben 38 betätigbaren Bremsbacken 40 dienen am Befestigungsteil 14 ausgebildete achsparallele Führungsflächen 54, denen Ansätze 56 an den Belagträgerplatten 46 dieser Bremsbacken zugeordnet sind, sowie Führungsflächen 58 an den einander zugewandten Seiten der beiden Arme 18 des Befestigungsteils 14. Diese beiden Bremsbacken 40 übertragen somit alle auf sie einwirkenden Bremskräfte unmittelbar auf das Befestigungsteil 14 des Bremsträgers 12.

Die beiden durch Verschieben des Schwimmrahmens 30 betätigbaren Bremsbacken 42 sind in einem Querjoch 60 des Schwimmrahmens 30 formschlüssig gehalten und übertragen deshalb bei beiden Drehrichtungen der Bremsscheibe 10 die auf sie einwirkenden Bremskräfte auf den Schwimmrahmen 30. Dieser kann sich beim Bremsen am Brückenteil 16 abstützen.

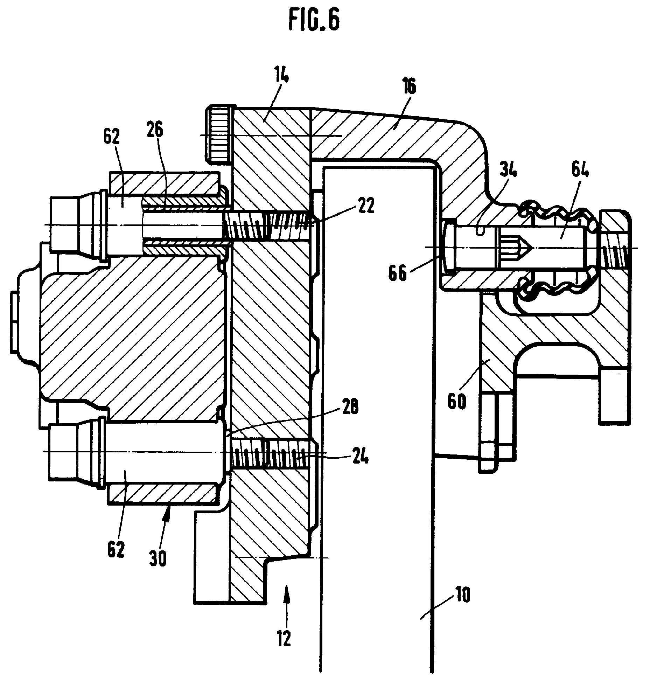

Gemäß Fig. 6 sind die beiden Bolzen 26 und 28 in je einer Büchse 62 geführt, die im Schwimmrahmen 30 befestigt ist. Die Führung 34 auf der fahrzeugäußeren Seite des Brückenteils 16 ist von einer zur Achse A parallelen Bohrung gebildet, in der ein am Schwimmrahmen 30 befestigter Bolzen 64 geführt ist. Die Führung 34 ist an ihrer axial inneren Seite mit einer eingepreßten Kappe 66 abgedichtet.

## Patentansprüche

1. Teilbelag-Scheibenbremse mit
- einem Bremsträger (12), der ein Befestigungsteil (14) zur Befestigung nahe einer Bremsscheibe (10) sowie ein die Bremsscheibe (10) übergreifendes, mittig angeordnetes Brückenteil (16) aufweist,
- Bremsbacken (40, 42), die auf je einer Seite der Bremsscheibe (10) angeordnet und am Bremsträger (12) gegen Bremskräfte abgestützt sind,
- einem Schwimmrahmen (30), der einen Teil der Bremsscheibe (10) sowie den Bremsträger (12) und die Bremsbacken (40, 42) umgreift und am Bremsträger (12) geführt ist, und
- mindestens einem Paar Betätigungszylinder (36), die am Schwimmrahmen (30) annähernd symmetrisch in bezug auf eine axiale Mittelebene (D) des Bremsträgers (12) angeordnet sind,
dadurch **gekennzeichnet,** daß
- auf jeder Seite der Bremsscheibe (10) zwei Bremsbacken (40, 42) angeordnet und durch einen Zwischenraum voneinander getrennt sind, dessen in Umfangsrichtung der Bremsscheibe gemessene Weite (C) mindestens ebensogroß ist wie die Breite des Brückenenteils (16),
- die Bremsbacken (40, 42) im Einbauzustand der Bremse im wesentlichen radial zur Bremsscheibe (10) am Brückenteil (16) vorbei ausbaubar sind,
- der Schwimmrahmen (30) auf zwei in der Mittelebene (D) des Bremsträgers (12) angeordneten Bolzen (26, 28) am Befestigungsteil (14) geführt ist und
- der Schwimmrahmen (30) zusätzlich an einer Führung (34) geführt ist, die am Brückenteil (16), vom Befestigungsteil (14) aus gesehen jenseits der Bremsscheibe (10), ausgebildet ist.

2. Teilbelag-Scheibenbremse nach Anspruch 1,
dadurch **gekennzeichnet,** daß die in Umfangsrichtung der Bremsscheibe (10) gemessene Weite (C) des Zwischenraums zwischen den Reibbelägen (44) je zweier auf derselben Seite der Bremsscheibe (10) angeordneter Bremsbacken (40 bzw. 42) mindestens halb so groß ist wie die in Umfangsrichtung gemessene Belagbreite (B) jedes einzelnen Reibbelags (44).

3. Teilbelag-Scheibenbremse nach Anspruch 2,
dadurch **gekennzeichnet,** daß die Weite (C) des Zwischenraums 70 bis 100 % der Belagbreite (B) beträgt.

## Claims

1. A spot type disc brake, comprising
- a brake carrier member (12) which includes a fastening portion (14) to be fixed close to a brake disc (10) and a centrally disposed bridging portion (16) straddling the brake disc (10),
- brake pads (40, 42) disposed at either side of the brake disc (10) and supported on the carrier member (12) against brake pressures,
- a floating frame (30) which embraces part of the brake disc (10) and the carrier member (12) as well as the brake pads (40, 42) and is guided at the carrier member (12), and
- at least one pair of actuating cylinders (36) arranged on the floating frame (30) approximately symmetrically with respect to an axial center plane (D) of the carrier member (12), **characterized** in that
- two brake pads (40, 42) are disposed at each side of the brake disc (10), separated from each other by a space whose width (C), measured in circumferential direction of the brake disc, is at least as great as the width of the bridging portion (16),
- with the brake in assembled state, the brake pads (40, 42) can be dismantled substantially radially in respect of the brake disc (10) past the bridging portion (16),
- the floating frame (30) is guided at the fastening portion (14) on two bolts (26, 28) which are disposed in the center plane (D) of the carrier member (12), and
- the floating frame (30), in addition, is guided at a guide means (34) which is formed at the bridging portion (16) beyond the brake disc (10), as seen from the fastening portion (14).

2. The spot type disc brake as claimed in claim 1,
characterized in that the width (C), measured in circumferential direction of the brake disc (10), of the space between the friction linings (44) of two brake pads each (40 or 42) disposed at the same side of the brake disc (10) is at least half as great as the lining width (B), measured in circumferential direction, of each individual friction lining (44).

3. The spot type disc brake as claimed in claim 2,
characterized in that the width (C) of said space amounts to from 70 to 100% of the width (B) of the lining.

## Revendications

1. Frein à disque à garnitures partielles, comprenant
- un support de frein (12), qui présente une partie de fixation (14) destiné à être fixée à proximité d'un disque de frein (10) ainsi qu'une partie pont (16) disposée en position centrale qui surmonte le disque de frein (10),
- des mâchoires de frein (40, 42) qui sont disposées chacune d'un côté du disque de frein (10) et prennent appui sur le support de frein (12) pour résister aux efforts de freinage,
- un cadre flottant (30) qui encadre une partie du disque de frein (10) ainsi que le support de frein (12) et les mâchoires de frein (40, 42), et est guidé sur le support de frein (12), et
- au moins une paire de cylindres d'actionnement (36) qui sont disposés sur le cadre flottant (30) à peu près symétriquement par rapport au plan médian axial (D) du support de frein (12),
caractérisé en ce que
- de chaque côté du disque de frein (10), sont disposées deux mâchoires de frein (40, 42) séparées l'une de l'autre par un intervalle dont la largeur (C), mesurée dans la direction circonférentielle du disque de frein, est au moins aussi grande que la largeur de la partie pont (16),
- dans l'état de montage du frein, les mâchoires de frein (40, 42) peuvent être démontées dans une direction sensiblement radiale par rapport au disque de frein (10), en passant à côté de la partie pont (16),
- le cadre flottant (30) est guidé par la partie de fixation (14) sur deux tiges (26, 28) disposées dans le plan médian du support de frein (12), et
- le cadre flottant (30) est guidé en supplément par un guide (34) qui est formé sur la partie pont (16), du côté du disque de frein (10) qui est à l'opposé de la partie de fixation (14).

2. Frein à disque à garnitures partielles selon la revendication 1,
caractérisé en ce que la largeur (C), mesurée dans la direction circonférentielle du disque de frein (10), de l'intervalle entre les garnitures de friction (44) des deux mâchoires de frein (40 ou 42) qui sont situées d'un même côté du disque de frein (10) est au moins aussi grande que la largeur (B) de chaque garniture partielle (44), mesurée dans la direction circonférentielle.

3. Frein à disque à garnitures partielles selon la revendication 2,
caractérisé en ce que la largeur (C) de l'intervalle correspond à 70 à 100 % de la largeur (B) des garnitures.
